# EUROPEAN PATENT APPLICATION

(11) **EP 2 952 427 A1**
(43) Date of publication of application: **09.12.2015**
(21) Application number: 15173028.0
(22) Date of filing: 08.03.2006
(51) Int. Cl.: B63H 5/08, B63B 1/08, B63H 5/16

(54) **STERN STRUCTURE OF SHIP**

(30) Priority: 11.03.2005 JP 2005069148
(62) Divisional of application: 06715399.9
(71) Applicant: KAWASAKI JUKOGYO KABUSHIKI KAISHA, Kobe shi, Hyogo 650-8670 (JP)
(72) Inventor: IWASAKI, Yasunori, Hobe-shi, Hyogo 650-8670 (JP); EBIRA, Kazuyuki, Hobe-shi, Hyogo 650-8670 (JP); OKUMURA, Hideaki, Hobe-shi, Hyogo 650-8670 (JP)
(74) Representative: Musker, David Charles

(57) **Abstract**

In a ship including a single screw vessel type stem equipped with overlapping propellers, a waterline shape of a stem S in an area of at least 0.4R (R denotes a propeller radius) in a vertical direction from shaft centers of propellers 1 and 2 is formed such that an inclination angle *α* of an aft end portion of the waterline is 15 degrees or smaller with respect to a hull centerline, and a virtual width at an aft end position is 600 mm or smaller when the waterline shape is extended to an aft end. Further, a bracket fin 8 may be provided in a space between each of stem tubes 3a and 4a into which propeller shafts 3 and 4 are respectively inserted and the stern S. Moreover, a wake improved fin 13 for improving a wake distribution which is accelerated by the rotation of the fore propeller 2 and flows into the aft propeller 1 is provided above the propeller shafts 3 and 4 and at the stern S.

## Description

### Technical Field

The present invention relates to a stem structure of a ship equipped with overlapping propellers (OLP) aimed to reduce bearing force and generation of cavitation of a propeller.

### Background Art

With increases in size and speed of ships, the load on a propeller of a single screw vessel increases, and the efficiency of the propeller decreases. In order to increase the propeller efficiency and improve a propulsive performance, a technique of equipping two propellers is known. In the case of equipping two propellers, the load per propeller decreases by half, and the propeller efficiency improves. In this case, it is important to avoid an increase in resistance of a hull as much as possible and not to decrease hull efficiency. Known as conventional technologies capable of realizing these aims are contra-rotating propellers and overlapping propellers.

A device capable of improving the propulsive performance without complicating the propeller shafting and the main engine control device (unlike the contra-rotating propellers) is the overlapping propellers device as shown in Japanese Utility Model Application Publication No. Hei 5-26796 (Patent Document 1).

The overlapping propellers of that document provide a propulsion device formed so that: a pair of right and left propellers are provided such that the centers thereof are respectively located near the centers of right and left bilge vortices; the rotational direction of each propeller is set to a direction opposite the bilge vortex, that is, it is set to outward turning; positions of generator lines of the propellers in the ship length direction are set to be identical with each other or slightly shifted from each other; the propellers are provided close to each other such that rotary surfaces thereof do not overlap each other when viewed in plan view; and the propellers are formed such that rakes thereof incline so as to be away from each other.

Japanese Utility Model Application Publication No. Hei 4-12389 (Patent Document 2) discloses overlapping propellers in which the rotational directions of starboard-side and port-side propellers are the same as each other, so that a rotating flow of a fore propeller is taken advantage of by an aft propeller.

### Disclosure of the Invention

### Problems to be Solved by the Invention

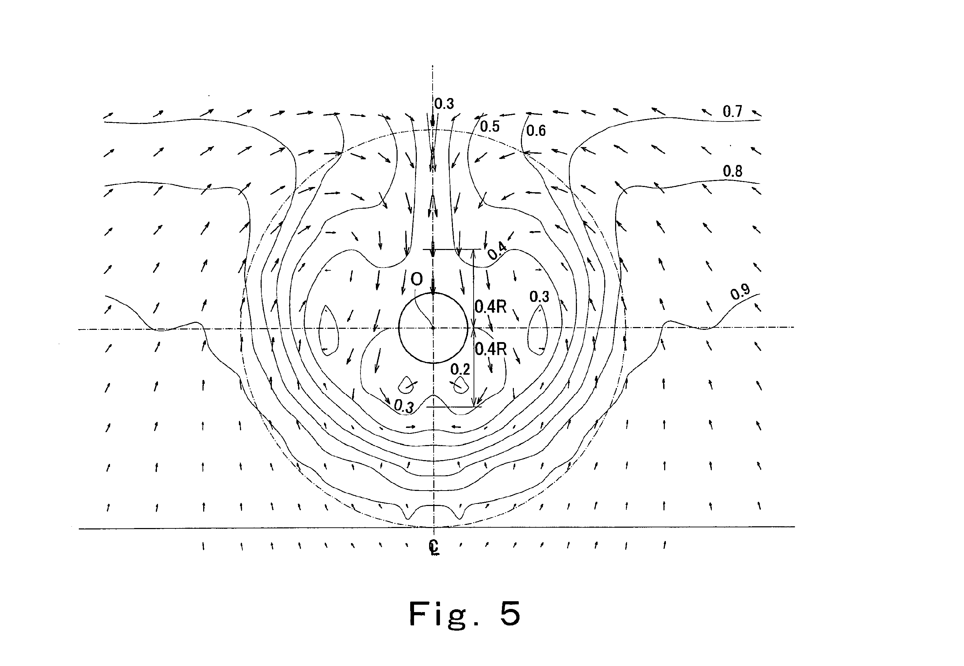

However, in the case of a typical single screw vessel type ship, there exists a very slow fluid flow in the plane of the propeller and near the hull centerline, and the fluid flow increases in speed as it goes farther from the hull centerline (see the wake distribution view of Fig. 5). In the case of causing the propeller whose center is not identical with a hull center to rotate as in Hei 5-26796, each propeller blade passes through slow flow and fast flow alternately during one rotation. Therefore, the load on the propeller blade significantly fluctuates, and the bearing force becomes excessively large compared to the single screw vessel.

Moreover, since the propeller blade passes through the very slow flow in the vicinity of the hull centerline, cavitation is generated in a wide range on the propeller blade of ordinary design, thereby causing erosion of the surface of the propeller.

### Means for Solving the Problems

Objects of the present invention are to reduce the bearing force and the generation of the cavitation of the propeller by, for example, sharpening a waterline shape of the stem in the plane of the propeller, providing a bracket fin, and providing a wake improved fin in a ship including a single screw vessel type stem equipped with overlapping propellers.

In order to solve the above problems, in a stern structure of a ship of the present invention, the ship comprises a single screw vessel type stem equipped with a propulsion device (hereinafter referred to as "overlapping propellers") formed so that: a pair of right and left propellers are disposed such that the propeller shaft centers thereof are respectively located near the centers of right and left bilge vortices; the rotational direction of at least one of the propellers is set to a direction opposite the bilge vortex, that is, it is set to outward turning; the propellers are provided close to each other such that the rotary surfaces thereof do not overlap each other when viewed in plan view; and the propellers are formed such that the rakes thereof incline so as to be away from each other, characterized in that a waterline shape of the stem in an area of at least 0.4R (R denotes a propeller radius) in a vertical direction from the propeller shaft center is sharpened such that: an inclination angle of an aft end portion of the waterline is 15 degrees or smaller with respect to the hull centerline; and a virtual width of the aft end position is 600 mm or smaller when the waterline shape is extended to the sharp end.

In accordance with the above construction, in the ship comprising a single screw vessel type stem equipped with overlapping propellers, the stem in the area of at least 0.4R (R denotes the propeller radius) in the vertical direction from the propeller shaft center can be sharpened toward a stem direction. With this, the fluid flow in the plane of the propeller is increased in speed, and the inflow speed of fluid flowing to the propeller blade during one rotation of the propeller is equalised, thus decreasing the bearing force. Furthermore, the fluid flow in the vicinity of the hull centerline increases in speed, so that the generation of cavitation on the propeller blade is suppressed.

The reason why the stem in the area of at least 0.4R (R denotes the propeller radius) in the vertical direction from the propeller shaft center is sharpened is because in this region, there exists a low flow rate region which becomes problematic when the overlapping propellers pass through the vicinity of the hull centerline. Moreover, although depending on the balance with the propulsive efficiency, it is preferable that the stem in the area of 0.6R in the vertical direction from the propeller shaft center be sharpened to reduce the cavitation and the bearing force. Moreover, the inclination angle of the aft end portion of the waterline is set to 15 degrees or smaller, because the flow behind the hull slows due to separation, etc. when the inclination angle exceeds 15 degrees.

Moreover, in a ship comprising a single screw vessel type stern equipped with overlapping propellers, a stem structure of the ship is such that a bracket fin is provided to fill in a space between the hull and each of stem tubes into which propeller shafts protruding from a starboard side and a port side of the stem portion located forward of an aft end are respectively inserted.

To be specific, in the stem tubes into which the propeller shafts of the overlapping propellers are respectively inserted, the propeller shafts project from the starboard side and the port side of the stern portion located forward of the aft end, and the bracket fin is provided to fill the space between the stem tube and the hull in the ship length direction, so that the bracket fin stops a separation vortex generated from the bottom of the hull to weaken the vortex. Thus, the rotational component of the inflow flowing to the propeller plane in the vicinity of the hull centerline decreases. As a result, since the inflow rate of fluid toward the propeller rotational direction decreases in the vicinity of the hull centerline where the cavitation tends to be generated, the observation of the cavitation (the beginning of the generation of the cavitation) is suppressed.

Meanwhile, the bearing force is generated due to nonuniformity between comparatively high propeller hydrodynamic force (thrust) generated at the propeller blade passing through the slow flow in the vicinity of the hull centerline and comparatively low thrust generated at the propeller blade passing through the fast flow outside the hull. By providing the bracket fin, the rotational component of the inflow flowing to the propeller plane in the vicinity of the hull centerline decreases, and the thrust generated at the propeller blade passing through the vicinity of the hull centerline decreases. As a result, hydrodynamic forces of respective propeller blades applied to the propeller shaft are equalised, thereby reducing the bearing force. In addition, weakening the stem separation vortex brings an effect of reducing the viscous drag of the hull.

Moreover, in a ship comprising a single screw vessel type stern equipped with overlapping propellers, a stem structure of the ship is such that a wake improved fin for improving a wake distribution which is accelerated by a rotation of a fore propeller and flows into an aft propeller is provided at the stem portion above the propeller shaft so as to extend toward a portion where the amount of change of flow rate of the wake is large or a region where the fore propeller and the aft propeller overlap each other when they rotate.

In accordance with the above construction, the wake distribution, which is accelerated by the rotation of the fore propeller and flows into the aft propeller, can be improved by the wake improved fin provided at the stem portion located forward of the fore propeller. In other words, the wake improved fin decreases the drastic change in speed of the wake, that is, the wake improved fin can change the wake distribution into a flow field such that the degree of increase in speed of the wake is reduced, and its speed gradient is eased. As a result, the bearing force can be decreased, and the generation of the cavitation can be suppressed.

The wake distribution varies even in the case of using the same single screw vessel type. In the case of using a conventional single screw vessel type OLP, it is preferable that the wake improved fins are provided so as to extend toward a portion where the amount of change in the flow speed of the wake is large in a region where the fore propeller and the aft propeller overlap each other, along the hull, and symmetrically. Depending on the wake distribution, the starboard-side wake improved fin and the port-side wake improved fin may be provided at different levels in height, or the wake improved fin may be provided only on one side.

Further, in a ship comprising a single screw vessel type stem equipped with overlapping propellers, a stem structure of the ship is such that: a waterline shape of the stem in an area of at least 0.4R (R denotes a propeller radius) in a vertical direction from a propeller shaft center is sharpened such that: an inclination angle of an aft end portion of the waterline is 15 degrees or smaller with respect to a hull centerline; and a virtual width of an aft end tip position is 600 mm or smaller when the waterline shape is extended to the aft end; and a bracket fin is provided to fill a space between the hull and each of stem tubes into which propeller shafts projecting from the starboard side and the port side of the stern portion located forward of an aft end are respectively inserted.

In accordance with the above construction, by sharpening the waterline shape in a certain vertical area in the vicinity of the height of the propeller shaft center, the fluid flow in the plane of the propeller is increased, and the inflow speed of fluid flowing to the propeller blade during one rotation of the propeller is equalised. In addition, by providing the bracket fin, the rotational component of the flow flowing to the propeller plane in the vicinity of the hull centerline decreases, thereby reducing the thrust generated at the propeller blade passing through the vicinity of the hull centerline. The combination of these effects equalises the hydrodynamic forces of respective propeller blades which are applied to the propeller shaft, thereby being able to further reduce the bearing force.

Further, by increasing the speed of the fluid flow in the vicinity of the hull centerline, the observation of the cavitation of the propeller blade is suppressed. In addition, since the inflow speed of fluid toward the propeller rotational direction decreases in the vicinity of the hull centerline where the cavitation tends to be generated, the observation of the cavitation is further suppressed. Further, since the flow of the stem is also smoothened, an effect of reducing the viscous drag of the hull can be obtained.

Moreover, in a ship comprising a single screw vessel type stern equipped with overlapping propellers, a stem structure of the ship is such that: a waterline shape of the stem in an area of at least 0.4R (R denotes a propeller radius) in a vertical direction from a propeller shaft center is sharpened such that: an inclination angle of an aft end portion of the waterline is 15 degrees or smaller with respect to the hull centerline; and a virtual width of an aft end position is 600 mm or smaller when the waterline shape is extended to the aft end; and a wake improved fin for improving a wake distribution which is accelerated by a rotation of a fore propeller and flows into an aft propeller is provided on the hull above a propeller shaft so as to extend toward a portion where the amount of change of flow rate of the wake is large.

In accordance with the above construction, since the effect obtained by sharpening the hull and the effect obtained by the wake improved fin are synergistically exerted, the effects of further reducing the bearing force and suppressing the generation of the cavitation can be obtained.

Moreover, in a ship comprising a single screw vessel type stern equipped with overlapping propellers, a stem structure of the ship is such that: a bracket fin is provided to fill in a space between the hull and each of stem tubes into which propeller shafts projecting from a starboard side and a port side of the stem portion located forward of an aft end are respectively inserted; and a wake improved fin for improving a wake distribution which is accelerated by the rotation of a fore propeller and flows into an aft propeller is provided at the stem portion above the propeller shaft so as to extend toward a portion where the amount of change of flow rate of the wake is large or a region where the fore propeller and the aft propeller overlap each other when they rotate.

In accordance with the above construction, since the effect obtained by the bracket fin and the effect obtained by the wake improved fin are synergistically exerted, the effects of further reducing the bearing force and suppressing the generation of the cavitation can be obtained.

Moreover, in a ship comprising a single screw vessel type stern equipped with overlapping propellers, a stem structure of the ship is such that: a waterline shape of the stem in an area of at least 0.4R (R denotes a propeller radius) in a vertical direction from a propeller shaft center is sharpened such that an inclination angle of an aft end portion of the waterline is 15 degrees or smaller with respect to a hull centerline, and a virtual width of an aft end position is 600 mm or smaller when the waterline shape is extended to the aft end; a bracket fin is provided in a space between the hull and each of stem tubes into which propeller shafts projecting from a starboard side and a port side of the stem portion located forward of an aft end are respectively inserted; and a wake improved fin for improving a wake distribution which is accelerated by a rotation of a fore propeller and flows into an aft propeller is provided above the propeller shaft and at the stern portion so as to extend toward a portion where the amount of change of flow rate of the wake is large or a region where the fore propeller and the aft propeller overlap each other when they rotate.

In accordance with the above construction, since three effects obtained by sharpening of the hull, the bracket fin and the wake improved fin are synergistically exerted, the effects of further reducing the bearing force and suppressing the generation of the cavitation can be obtained.

Moreover, in the above-described stem structure, when the bracket fin is provided within a range of an outer diameter of the stem tube and has a linear shape or a curved shape extending gradually upward or downward from a base end portion of the bracket fin toward a stern direction, the flow speed of the rotating flow flowing into the propeller is adjustable. To be specific, when the bracket fin is provided so as to extend upward toward the aft end, the flow speed of the rotating flow in the rotational direction decreases, so that the effects of suppressing the cavitation and reducing the bearing force are further improved. Meanwhile, when the bracket fin is provided so as to extend downward toward the aft end, the flow speed in the rotational direction increases, so that the propulsive efficiency is further improved.

Moreover, in the above-described stem structure, when the bracket fin is provided so as to extend linearly from the insert portion of the stem tube toward an aft direction, and has, in a vicinity of an aft end portion thereof and within a range of an outer diameter of the stem tube, a linear shape or a curved shape extending gradually upward or downward toward a stem direction, the same effects as above can be obtained.

Moreover, in the above-described stern structure, when the rotational direction of the fore propeller located on a fore side is set to a direction opposite the bilge vortex, that is, it is set to outward turning, and the rotational direction of the aft propeller located on a stem side is set to be identical with that of the fore propeller, that is, it is set to inward turning, the fore propeller tries to take the bilge vortex rotating flow, while the rotating flow generated by the rotation of the fore propeller is collected by the aft propeller located on the stem side.

### Effects of the Invention

In accordance with the present invention, even in the case of using the overlapping propellers, the bearing force can be made equal to or smaller than that of the single screw vessel, and the generation of harmful cavitation can be suppressed effectively.

Moreover, by providing a bracket fin to fill a space between a stem tube into which a propeller shaft is inserted and a hull, the reduction in the bearing force and the suppression of the generation of the cavitation can be achieved, and a hull resistance can also be reduced by a maximum of about 2%.

Moreover, by providing a wake improved fin, the reduction in the bearing force and the suppression of the generation of the cavitation can be achieved.

Moreover, by mutually combining sharpening of the hull, the bracket fin and the wake improved fin, their respective operational effects are synergistically exerted, and the further reduction in the bearing force and the further suppression of the generation of the cavitation can be achieved.

### Brief Description of the Drawings

Figs. 1(a) and 1(b) are aft views of overlapping propellers when viewed from the aft of a stem portion. Fig. 1(a) shows a case where both starboard-side and port-side propellers are outward turning, and Fig. 1(b) shows a case where the port-side propeller

(propeller located on the fore side) is outward turning whereas the starboard-side propeller (propeller located on an aft side) is inward turning.
Fig. 2 is a plan view of the overlapping propellers.
Fig. 3 is a partially enlarged plan view of the vicinity of an aft end of a stern.
Fig. 4 is a view of a wake distribution and a propeller arrangement according to the present invention.
Fig. 5 is a view of the wake distribution at the stem portion of a conventional single screw vessel.
Figs. 6(a) to 6(c) show side sectional views of a bracket fin. Fig. 6(a) shows a blade shape, Fig. 6(b) shows a circular arc blade shape, and Fig. 6(c) shows a plate shape.
Fig. 7 is a side sectional view when the bracket fin has a curved shape.
Fig. 8 is a transverse sectional view of the vicinity of the aft end when the bracket fin is provided between the hull and a stem tube.
Fig. 9 is a side view of a starboard side when wake improved fins are provided symmetrically at the stem portion located forward of the propeller (bracket fin 8 is shown in perspective).
Fig. 10 is a plan view of Fig. 9 (only the stem and the wake improved fins are shown by solid lines, and the others are shown by chain lines).
Figs. 11 (a), 11(b) and 11(c) are views showing different aspects for providing the wake improved fin(s).
Fig. 12 shows a result of an experiment of measuring a wake distribution flowing into an aft propeller in such a condition that only a fore propeller of an overlapping propeller ship type is rotating. Fig. 12 is a view of a wake distribution in a construction where the wake improved fin is not provided.
Fig. 13 is a view of a wake distribution in a construction where the wake improved fins are provided.

### Explanation of Reference Numbers

1: (aft) propeller
2: (fore) propeller
1a, 2a: rake
1c, 2c: propeller rotation trajectory
3,4: propeller shaft
3a, 4a: stem tube
5, 6: propeller boss
7:rudder
8: bracket fin
11: overlap region
12: portion where the amount of change in a flow speed is large
13: wake improved fin
B1, B2: bilge vortex
R1, R2, R3: propeller rotational direction
O: propeller shaft center
S: stem

### Best Mode for Carrying Out the Invention

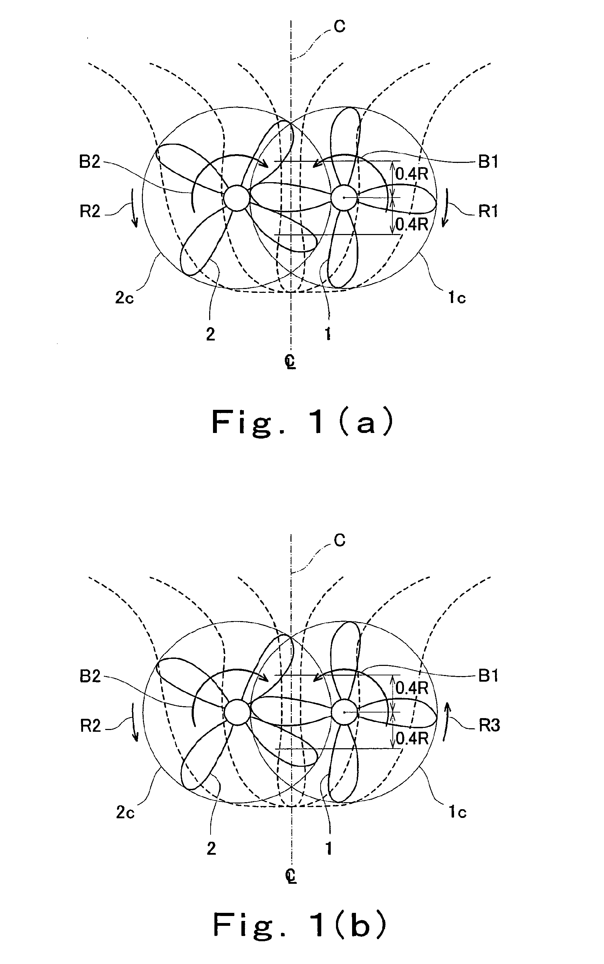

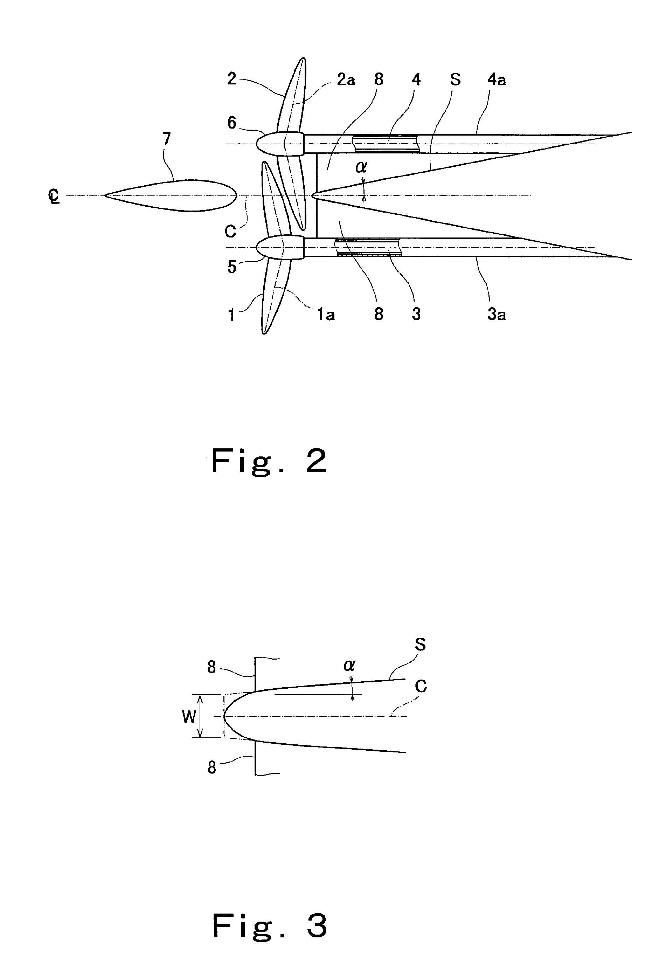

Hereinafter, embodiments of the present invention will be explained with reference to the drawings. Figs. 1(a) and 1(b) are aft views of the overlapping propellers when viewed from the aft of the stem portion toward the front, and Fig. 2 is a plan view of the overlapping propellers. Either the starboard-side or the port-side propeller may be located forwards, and Fig. 2 is one example.

As shown in Figs. 1(a) and 2, two, that is, a pair of right and left propellers 1 and 2 (starboard-side propeller 1, port-side propeller 2) are provided such that propeller shafts 3 and 4 are symmetrical with respect to the hull centerline C.

The positions of the propeller 1 (2) in the height direction and in the ship width direction are set so that the propeller shaft 3 (4) of the propeller 1 (2) is located near the approximate center of a bilge vortex B1 (B2), and the rotational direction R1 (R2) of the propeller 1 (2) is set to a direction opposite the bilge vortex B1 (B2), that is, it is set to outward turning. Further, the propellers 1 and 2 are configured such that positions of reference lines thereof in the ship length direction are identical with each other or slightly shifted from each other, the propellers 1 and 2 are provided as close as possible to each other in such a range that their rotary surfaces do not overlap each other when viewed in plan view, and the propellers 1 and 2 are formed such that their rakes 1a and 2a incline so as to be away from each other.

As shown in Fig. 2, the lengthwise positions of starboard-side and port-side propeller bosses 5 and 6 are identical with each other, and the starboard-side propeller 1 and the port-side propeller 2 are provided so as to project radially from the propeller bosses 5 and 6, respectively. The rake 1a of the starboard-side propeller 1 is formed so as to incline aft ward from a face perpendicular to the propeller shaft 3, and the rake 2a of the port-side propeller 2 is formed so as to incline forward from a face perpendicular to the propeller shaft 4. In Fig. 2, the port-side propeller 2 is a propeller (also referred to as "fore propeller") located on a fore side, and the starboard-side propeller 1 is a propeller (also referred to as "aft propeller") on an aft side. In this case, as shown in Fig. 2, the rake of the fore propeller surely inclines forward, and the rake of the aft propeller surely inclines aft ward.

In the construction shown in Fig. 1(b), the rotational direction R2 of the propeller located on the fore side, that is, the port-side propeller, is set to be opposite the bilge vortex B2, that is, it is set to outward turning, and a rotational direction R3 of the propeller located on the aft side, that is, the starboard-side propeller 1 is set to be identical with that of the propeller (port-side propeller 2) located on the fore side, that is, it is set to inward turning. Thus, the propeller (port-side propeller 2) located on the fore side can collect a bilge vortex rotating flow, while the starboard-side propeller 1 can collect a rotating flow generated by the rotation of the propeller (port-side propeller 2) located on the fore side. Whereas in this example, the port-side propeller is located forward, and the starboard-side propeller is located aft ward, the lengthwise positions of the propellers may be reversed. In such a case, the rotational direction of the fore propeller is set to be the direction opposite the bilge vortex, that is, it is set to outward turning.

In Figs. 1(a) and 1(b), dotted lines indicate the hull line view of the stem portion, and the type of ship shown in Figs. 1(a) and 1(b) is a so-called single screw vessel type stem which is formed symmetrical with respect to the hull centerline C and whose shape is narrowed down gradually toward the aft end.

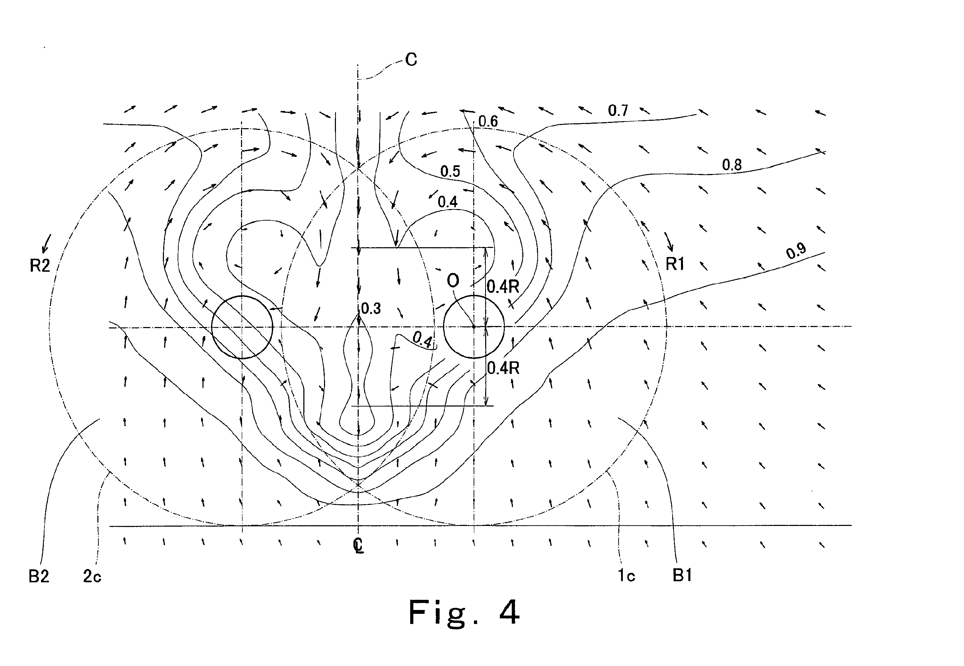

As shown in the view of the wake distribution and the propeller arrangement according to the present invention in Fig. 4, in the case of the flow of such a single screw vessel type stem portion, there exist the above-described symmetrical bilge vortices B1 and B2. In Fig. 4, arrows indicate directions of water flow of the bilge vortices B1 and B2, and each of the bilge vortices B1 and B2 generates the rotating flow of inward turning toward the hull center, that is, a counterclockwise rotating flow on the starboard side when viewed from the aft of the stem and a clockwise rotating flow on the port side when viewed from the aft of the stern.

As described in Fig. 1(a), the propeller shafts 3 and 4 are respectively disposed close to the centers of the bilge vortices B1 and B2, and the propeller rotational directions R1 and R2 are respectively set to directions opposite the rotational directions of the bilge vortices B1 and B2, that is, they are set to outward turning. Thus, effective utilization of the starboard-side and port-side bilge vortices B1 and B2 are achieved, and the hull efficiency can be improved.

As shown in Fig. 2, a pair of the propeller shafts 3 and 4 and stem tubes 3a and 4a into which the propeller shafts 3 and 4 are respectively inserted extend respectively from the starboard side and the port side of a stem S, located forward of the aft end, substantially parallel with each other toward the stem direction (they extend toward the stem direction in a substantially inverted V shape or a substantially V shape depending on the arrangement of a main engine), and the propellers 1 and 2 are respectively attached to the propeller bosses 5 and 6 respectively provided at the aft ends of the propeller shafts 3 and 4.

As shown in Figs. 1 and 4, the propellers 1 and 2 rotate along rotation trajectories 1c and 2c, respectively. Moreover, as shown in Fig. 2, a rudder 7 is provided behind the propellers and on the hull centerline C.

As also shown in Figs. 2 and 3 (partially enlarged plan view of the aft end), the stem S is sharpened toward the stem direction so as to form an acute-angled section, as described below.

That is, the stern S is sharpened such that: regarding the waterline shape in an area of at least 0.4R (R denotes a propeller radius) in a vertical direction from a propeller shaft center O, preferably in an area of 0.6R in the vertical direction from the propeller shaft center O, an inclination angle *α* of an aft end portion of the waterline is 15 degrees or smaller (0 ∼ 15 degrees) with respect to the hull centerline C; and a virtual width W at an aft end position when the waterline shape is extended to an aft end is 600 mm or less.

In accordance with the above construction, as is clear from a comparison between Fig. 4 showing the view of the wake distribution at the stem portion of the present invention and Fig. 5 showing the view of the wake distribution at the stem portion of a conventional single screw vessel, the fluid (water) flow in the area of at least 0.4R in the vertical direction in the vicinity of the propeller shaft center O increases, and the inflow speed of fluid flowing to the propeller blade during one rotation of the propeller is equalised. Thus, the bearing force reduces, and the fluid flow in the vicinity of the hull centerline C increases in speed, so that the generation of the cavitation of the propeller blade is suppressed.

Here, the reason why the hull in the area of at least 0.4R (R denotes the propeller radius) in the vertical direction from the propeller shaft center is sharpened is because this region is a low flow speed region which becomes problematic when the overlapping propellers pass through the vicinity of the hull centerline. Although depending on the balance with the propulsive efficiency, it is preferable that the hull in the area of 0.6R in the vertical direction from the propeller shaft center be sharpened to reduce the cavitation and the bearing force. Moreover, the reason why the inclination angle of the aft end portion of the waterline is set to 15 degrees or smaller is because the flow behind the hull slows due to separation, etc. when the inclination angle exceeds 15 degrees.

As shown in Fig. 2, bracket fins 8 that are additional components are respectively provided between the sharpened stem S and the stern tube 3a into which the propeller shaft 3 is inserted and between the sharpened stem S and the stem tube 4a into which the propeller shaft 4 is inserted. To be specific, the bracket fins 8 which protrude in a horizontal direction from the stem S located forward of the aft end and extend in a direction from the stem tubes 3a and 4a toward the stem S are provided to fill an almost entire space between the stem S and the stem tube 3a and between the stem S and the stem tube 4a.

As is clear from a comparison between Fig. 4 showing the view of the wake distribution at the stem portion of the present invention and Fig. 5 showing the view of the wake distribution at the stern portion of the conventional single screw vessel, by providing such bracket fins 8, the bracket fins 8 eliminate a separation vortex generated from a stem ship bottom to weaken the vortex, thereby decreasing the rotational component of the inflow flowing to the propeller plane in the vicinity of the hull centerline C. In Figs. 4 and 5, numerical values on curving lines denote values obtained by making the flow speed in the ship length direction dimensionless with the ship speed, and arrows denote vectors of the flow speed in the plane of the propeller.

As a result, since the inflow speed of fluid toward the propeller rotational direction decreases in the vicinity of the hull centerline where the cavitation tends to be generated, the inception of the cavitation is suppressed.

The bearing force is also decreased. To be specific, in the case of not providing the bracket fins 8, the problem is nonuniformity between comparatively large thrust and torque generated at the propeller blade passing through the slow flow in the vicinity of the hull centerline C and comparatively small thrust and torque generated at the propeller blade passing through the fast flow outside the hull. By providing the bracket fins 8, the rotational component of the flow flowing to the propeller plane in the vicinity of the hull centerline C decreases, and the large thrust generated at the propeller blade passing through the vicinity of the hull centerline C decreases. Thus, hydrodynamic forces of respective propeller blades which are applied to the propeller shaft are equalised, thereby reducing the bearing force. Also, with the bracket fins 8, the stem tubes 3a and 4a (propeller shafts 3 and 4) are firmly supported by the hull. In addition, weakening the stem separation vortex brings an effect of reducing the viscous drag of the hull.

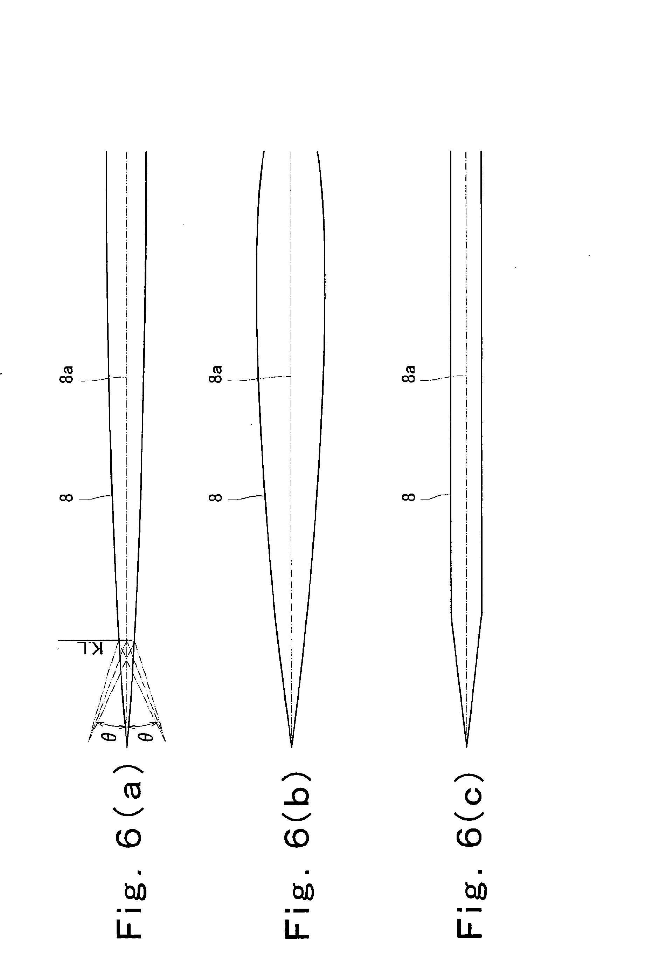

As shown in Figs. 6(a) to 6(c), the vertical sectional shape of the bracket fin 8 in the ship length direction is formed such that the centerline 8a thereof extends linearly in the stem direction, and an entire shape thereof may be any one of a blade shape, a semicircular arc blade shape and a plate shape.

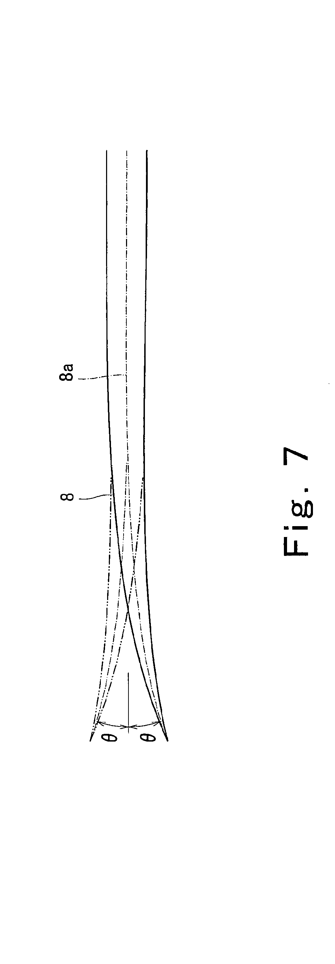

As shown by chain lines in Fig. 6(a), the bracket fin 8 may bend in an upward direction or a downward direction at an inclination angle θ (=0 to 20 degrees) at an arbitrary position distant from the aft end portion. Alternatively, as shown in Fig. 7, the bracket fin 8 may have a curved shape configured such that the centerline 8a viewed from a ship side is curved gradually upward or downward toward the stem direction at the inclination angle θ (=0 to 20 degrees). This makes it possible to adjust the flow speed of the rotating flow flowing into the propeller. To be specific, when the bracket fin 8 bends upward toward the aft end, the flow speed of the rotating flow in the rotational direction becomes slower, so that higher effects of suppressing the cavitation and reducing the bearing force are obtained. Moreover, when the bracket fin 8 bends downward toward the stem end, the flow speed in the rotational direction becomes higher, so that the propulsive efficiency is further improved.

Here, the knuckle inclination angle is set to 20 degrees or smaller both upward and downward, since the bracket fin itself causes a resistance if the bend inclination angle exceeds 20 degrees.

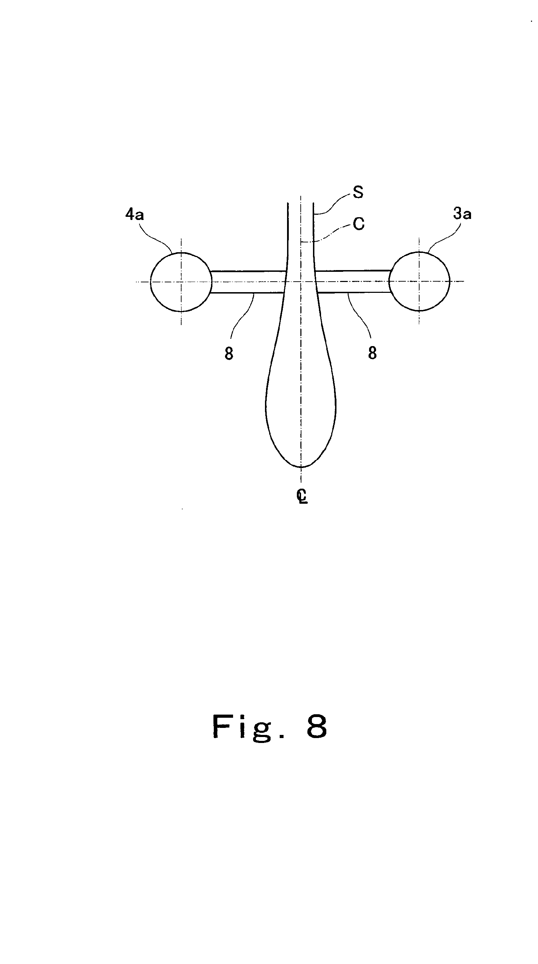

In an example shown in Fig. 8, the bracket fins 8 are respectively provided between the stem tube 3a and the stem S and between the stern tube 4a and the stem S horizontally (direction perpendicular to the hull centerline C). To suppress an increase in resistance, it is preferable that the maximum thickness of the bracket fin 8 be equal to or less than the diameter (outer diameter) of the stem tubes 3a and 4a into which the propeller shafts are respectively inserted.

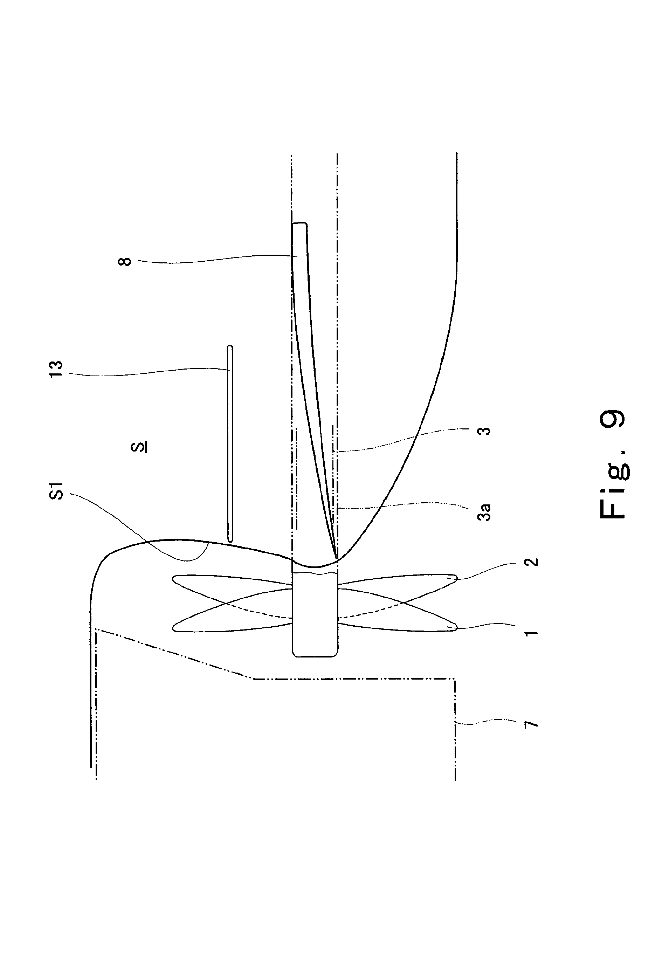

Moreover, in an example shown in the side view of the starboard side of Fig. 9, the bracket fin 8 of a blade sectional shape may be formed so as to have, in this example, a gradually downward curved shape in the stem direction from a base end portion thereof to an aft end thereof. In this case, the bracket fin 8 of curved shape is provided within a range of the outer diameter of the stem tube 3a. To be specific, the bracket fin 8 of Fig. 9 is such that the base end portion is located at an upper end position of the stem tube 3a, the bracket fin 8 extends in the stem direction from the upper end position as a base point, and the aft end portion of the bracket fin 8 conforms to a lower end position of the stem tube 3a. Instead of the bracket fin 8 of curved shape, the bracket fin 8 extending linearly as shown in Figs. 6(a) to 6(c) may be provided horizontally in the stem direction, or may be provided so as to be inclined downward or upward within the range of the outer diameter of the stem tube 3a. When the entire bracket fin 8 is provided so as to have an upward or downward curved shape or an upward or downward inclined linear shape, it becomes possible to improve the operational effect of the bracket fin 8.

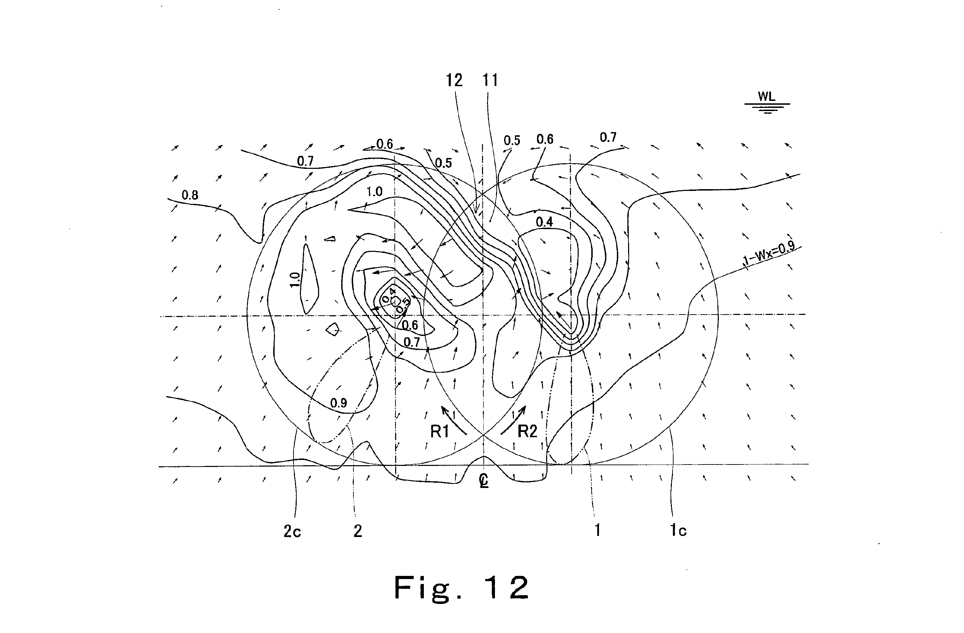

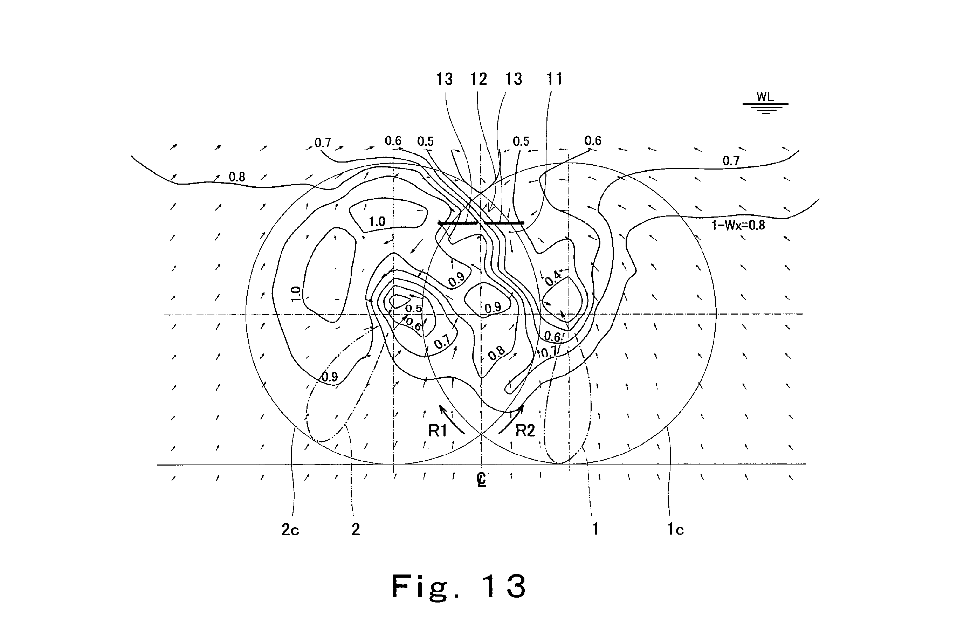

In the overlapping propeller (OLP) ship type (see Fig. 2), the flow (wake) flowing into the aft propeller 1 disposed (installed) aft ward is significantly affected by the rotating flow of the fore propeller 2. For this reason, the aft propeller 1 operates in a complex flow field (wake distribution) that is different from the wake distribution known in the case of the conventional single screw vessel. To examine this, model experiments were carried out. Figs. 12 and 13 show results of experiments of measuring a wake distribution flowing into the aft propeller 1 in such a condition that only the fore propeller 2 was rotating in the overlapping propeller ship type. Fig. 12 shows the wake distribution when no wake improved fin 13 described below is provided, and Fig. 13 shows the wake distribution when the wake improved fins 13 are provided.

In the overlapping propeller ship type (see Fig. 2), the flow of high flow speed in the axial direction accelerated by the fore propeller 2 flows toward the aft propeller 1 into a portion (this portion is also referred to as "overlap region") 11 (Fig. 12) where the fore propeller 2 and the aft propeller 1 overlap each other, and the rotating flow of the fore propeller 2 flows in the same rotational direction as the aft propeller 1.

As shown in Fig. 12, the experimental result showed that in an oblique region which is above the propeller shaft and includes the overlap region 11, there exists a region where the amount of change of the wake distribution is large, that is, a region including a portion 12 where the amount of change in the flow speed is large. Especially, 1-Wx changes from 1.0 to 0.5 in an upper portion of the overlap region 11, and thus it is clear that there is a drastic change in speed. Also, it is clear that its speed gradient is steep.

When the aft propeller 1 rotates in such a wake distribution, the thrust and torque generated by the propeller changes drastically from small to large before and after when the aft propeller 1 passes through the portion 12 (where the amount of change in the flow speed is large) of the overlap region 11. This unbalance of the thrust and torque causes drastic increase in the bearing force.

To solve the problem of the bearing force in the overlapping propeller (OLP) ship type as much as possible, it is desirable to provide a wake improved fin 13 which is located at the stem portion forward of the propellers and controls the stem flow in order to improve the flow distribution (wake distribution) flowing into the aft propeller 1.

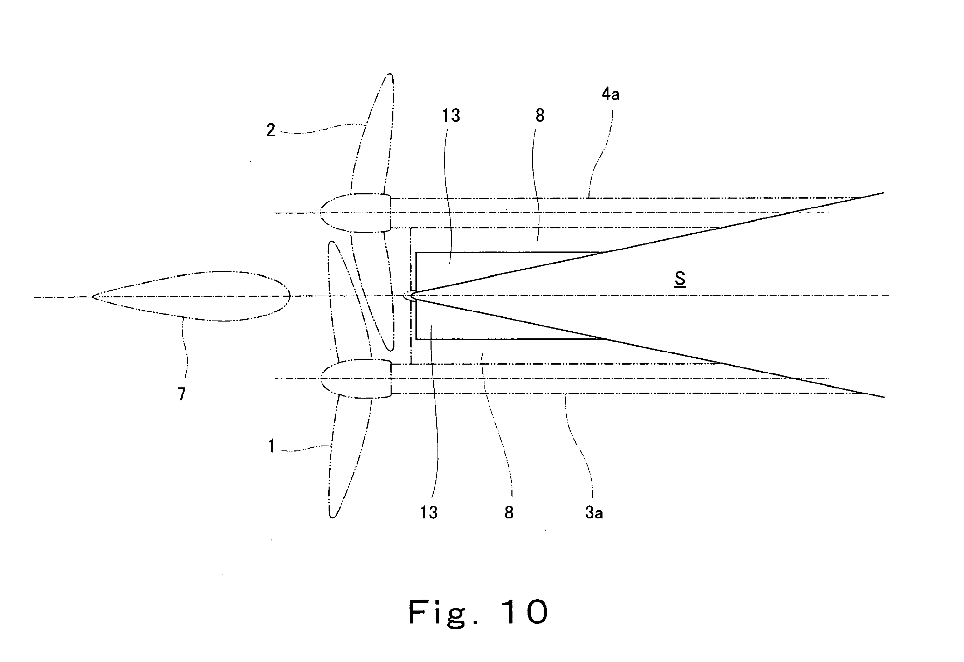

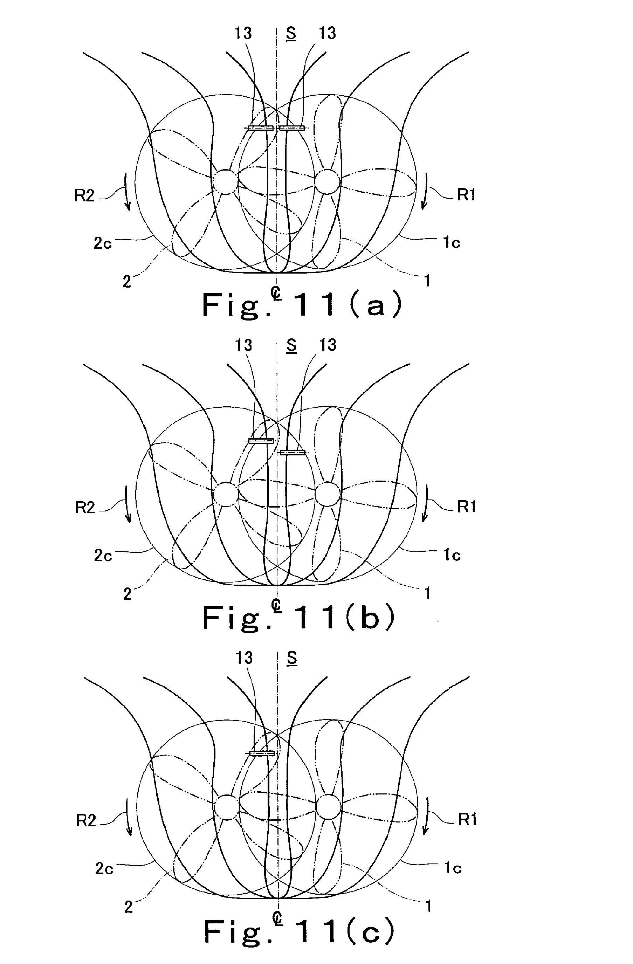

Fig. 9 is the side view of the starboard side (the bracket fin 8 is shown in perspective) when the wake improved fin 13 for improving the wake distribution which is accelerated by the rotation of the fore propeller 2 and flows into the aft propeller 1 is provided above the propeller shaft 3 and at the stem S. Fig. 10 is the plan view of Fig. 9 (only the stem S and the wake improved fin 13 are shown by solid lines, and the others are shown by chain lines). Figs. 11 (a), 11(b) and 11(c) are views showing three different aspects for providing the wake improved fin(s) 13.

As shown in the wake distribution view of Fig. 13, the wake improved fins 13 are provided so as to extend toward the portion 12 (overlap region 11 in the example shown in Fig. 13) where the amount of change in the flow speed is large. To be specific, in the examples shown in Figs. 9 and 10, the wake improved fins 13 are provided above the propeller shafts 3 and 4 (stern tubes 3a and 3b), project horizontally respectively from the starboard side and the port side of the stem S, and extend along the stem S up to the vicinity of an aft end S1. As shown in the plan view of Fig. 10, the wake improved fin 13 has a substantially triangular shape substantially similar to the above-described bracket fin 8. As with the bracket fin 8, the wake improved fin 13 may be a plate shape or a blade shape. The wake improved fin 13 does not have to extend horizontally toward the aft end S1, but may have a downward curved shape extending up to the vicinity of the aft end as with the bracket fin 8 of Fig. 9 or may have an upward curved shape (not shown). Moreover, the wake improved fin 13 may extend linearly up to the vicinity of the aft end so as to be inclined downward or upward.

As shown in Fig. 13, when the wake improved fins 13 are provided at the stem S, the above-described drastic change of flow speed in Fig. 12 is eased, and the gradient of change of flow speed is also eased. In other words, by providing the wake improved fins 13, the flow field behind the fore propeller 2 can be changed. When the aft propeller 1 rotates in this improved wake distribution, the unbalance of the thrust decreases, and the increase in the bearing force is suppressed. Also, the generation of the cavitation is suppressed. It became clear from the result of the model experiment that in the case of providing the wake improved fin 13, the bearing force can be decreased to about 1/10, and the fluctuating pressure caused by the cavitation which is above the propeller plane can be reduced by about half, as compared with the case where the wake improved fin 13 is not provided.

As above, when the wake improved fins 13 are provided as shown in Fig. 13, it is clear that as compared with the case where the wake improved fin is not provided as shown in Fig. 12, portions where the wake distribution is dense (the amount of change in the flow speed is large) are reduced by providing the wake improved fins 13. Moreover, it is also clear that the rotating flow whose rotational direction is the same as that of the propeller weakens when the wake improved fins are provided. When viewing the rotating flow in a circumferential speed distribution, it is clear that the change in speed in the case of providing the wake improved fins is smaller than that in the case of not providing the wake improved fins, and the cycle of change in speed in the case of providing the wake improved fins is longer. This result indicates that the wake distribution in the case of providing the wake improved fins is a wake distribution such that the bearing force is reduced.

As shown in Figs. 9 and 10, providing the wake improved fins 13 along the above-described sharpened stem S and providing the bracket fins 8 together is preferable to synergistically produce respective operational effects of the sharpening of the stem S, the bracket fins 8 and the wake improved fins 13.

As shown in Fig. 11(a), as an aspect of providing the wake improved fin 13, the wake improved fins 13 may be provided symmetrically on the starboard side and the port side of the stem S, respectively. Each of the wake improved fins 13 is provided so as to be within the rotary surface of the propeller and extend toward the portion 12 wherein the amount of change in the flow speed is large and/or the overlap region 11.

Alternatively, as shown in Fig. 11(b), the port-side wake improved fin 13 and the starboard-side wake improved fin 13 may be provided at different levels in height (the port-side fin is provided on the upper side, and the starboard-side fin is provided on the lower side). Since the portion 12 where the amount of change in the flow speed is large in Fig. 12 is generated obliquely downward from the fore propeller 2 toward the aft propeller 1, the port-side fin and the starboard-side fin are provided so as to extend toward the portion 12 where the amount of change in the flow speed is large and/or the overlap region 11.

In a further alternative, as shown in Fig. 11(c), the wake improved fin 13 may be provided only on the fore propeller side. This is because the region in the vicinity of the end portion of the propeller mainly attributes to the generation of the thrust and torque, and it is only necessary to reduce the change in speed of the wake in this region.

### Industrial Applicability

The overlapping propellers according to the present invention are effective in reducing the bearing force and suppressing the generation of the harmful cavitation, and are applicable to not only low-speed ships but also medium-speed and high-speed ships.

### Final

For the avoidance of doubt, the content of the parent application PCT/JP2006/304479 published as WO2006095774 (A1) in Japanese, and its EP version published as EP1892183, are incorporated herein by reference to the intent that any inaccuracies in the present specification may be corrected based theron.

### ALTERNATIVE EMBODIMENTS

Alternative embodiments are set out in the following numbered clauses:
1. A stem structure of a ship comprising a single screw vessel type stem equipped with a propulsion device (hereinafter referred to as "overlapping propellers") formed such that:
   a pair of right and left propellers are disposed such that propeller shaft centers thereof are respectively located near centers of right and left bilge vortices; the rotational direction of at least one of the propellers is set to a direction opposite the bilge vortex, that is, it is set to outward turning; the propellers are provided close to each other such that the rotary surfaces thereof do not touch each other when viewed in plan view; and the propellers are formed such that the rakes thereof incline so as to be away from each other,
   characterized in that
   the waterline shape of the stem in an area of at least 0.4R (R denotes a propeller radius) in a vertical direction from the propeller shaft center is sharpened such that: an inclination angle of an aft end portion of the waterline is 15 degrees or less with respect to the hull centerline; and a virtual width of an aft end position is 600 mm or less when the waterline shape is extended to the aft end.
2. A stem structure of a ship comprising a single screw vessel type stem equipped with overlapping propellers, characterized in that
   a bracket fin is provided in a space between the hull and each of stem tubes into which propeller shafts projecting from a starboard side and a port side of the hull located forward of an aft end are respectively inserted.
3. A stem structure of a ship comprising a single screw vessel type stem equipped with overlapping propellers, characterized in that
   a wake improved fin for improving a wake distribution which is accelerated by a rotation of a fore propeller and flows into an aft propeller is provided on the hull above the propeller shaft so as to extend toward a portion where the amount of change of flow rate of the wake is large or a region where the fore propeller and the aft propeller overlap each other when they rotate.
4. A stem structure of a ship comprising a single screw vessel type stem equipped with overlapping propellers, characterized in that
   a waterline shape of the stem in an area of at least 0.4R (R denotes a propeller radius) in a vertical direction from a propeller shaft center is sharpened such that: an inclination angle of an aft end portion of the waterline is 15 degrees or less with respect to the hull centerline; and a virtual width of an aft end position is 600 mm or smaller when the waterline shape is extended to the aft end, and
   a bracket fin is provided in a space between the hull and each of stem tubes into which propeller shafts projecting from a starboard side and a port side of the stem located forward of an aft end are respectively inserted.
5. A stem structure of a ship comprising a single screw vessel type stem equipped with overlapping propellers, characterized in that
   a waterline shape of the stem in an area of at least 0.4R (R denotes a propeller radius) in a vertical direction from a propeller shaft center is sharpened such that: an inclination angle of an aft end portion of the waterline is 15 degrees or less with respect to the hull centerline; and a virtual width of an aft end position is 600 mm or smaller when the waterline shape is extended to the aft end, and
   a wake improved fin for improving a wake distribution which is accelerated by a rotation of a fore propeller and flows into an aft propeller is provided on the hull above a propeller shaft so as to extend toward a portion where the amount of change of flow rate of the wake is large or a region where the fore propeller and the aft propeller overlap each other when they rotate.
6. A stem structure of a ship comprising a single screw vessel type stem equipped with overlapping propellers, characterized in that
   a bracket fin is provided in a space between the hull and each of stem tubes into which propeller shafts projecting from a starboard side and a port side of the stem located forward of an aft end are respectively inserted, and
   a wake improved fin for improving a wake distribution which is accelerated by a rotation of a fore propeller and flows into an aft propeller is provided at the hull above the propeller shaft so as to extend toward a portion where the amount of change of flow rate of the wake is large or a region where the fore propeller and the aft propeller overlap each other when they rotate.
7. A stem structure of a ship comprising a single screw vessel type stem equipped with overlapping propellers, characterized in that
   a waterline shape of the hull in an area of at least 0.4R (R denotes a propeller radius) in a vertical direction from a propeller shaft center is sharpened such that: an inclination angle of an aft end portion of the waterline is 15 degrees or less with respect to a hull centerline; and a virtual width of an aft end position is 600 mm or less when the waterline shape is extended to the aft end,
   a bracket fin is provided in a space between the hull and each of stem tubes into which propeller shafts projecting from a starboard side and a port side of the stem portion located forward of an aft end are respectively inserted, and
   a wake improved fin for improving a wake distribution which is accelerated by a rotation of a fore propeller and flows into an aft propeller is provided above the propeller shaft and at the hull so as to extend toward a portion where the amount of change of flow rate of the wake is large or a region where the fore propeller and the aft propeller overlap each other when they rotate.
8. The stem structure according to any one of clauses 2, 4, 6 and 7, characterized in that the bracket fin is provided within a range of an outer diameter of the stem tube and has a linear shape or a curved shape extending gradually upward or downward from the base end portion bracket fin toward a stem direction.
9. The stem structure according to any one of clauses 2, 4, 6 and 7, characterized in that the bracket fin is provided so as to extend linearly from the base end portion of the bracket fin toward a stem direction, and has, in a vicinity of an aft end portion thereof and within a range of an outer diameter of the stem tube, a linear shape or a curved shape extending gradually upward or downward toward a stem direction.
10. The stem structure according to any one of clauses 1 to 9, characterized in that a rotational direction of the fore propeller located on a fore side is set to a direction opposite the bilge vortex, that is, it is set to outward turning, and a rotational direction of the aft propeller located on an aft side is set to be identical with that of the fore propeller, that is, it is set to inward turning.

## Claims

1. A stem structure of a ship comprising a single-screw-vessel-type stem, symmetrical with respect to the hull centerline (C) and narrowing down gradually toward the aft end, equipped with a propulsion device (hereinafter referred to as "overlapping propellers"), having a pair of right and left propellers (1, 2) disposed such that propeller shaft centers thereof are respectively located near centers of right and left bilge vortices; the rotational direction of at least one of the propellers being set to a direction opposite the bilge vortex, that is, it is set to outward turning; the propellers being provided close to each other such that the rotary surfaces thereof do not touch each other when viewed in plan view; and the propellers being formed such that the rakes thereof incline so as to be away from each other, further comprising:
a bracket fin (8) in a space between the hull and each of stern tubes (3a, 4a) into which propeller shafts (3, 4) projecting from a starboard side and a port side of the hull located forward of an aft end are respectively inserted, to almost entirely fill that space.

2. A stern structure according to claim 1, further comprising
a wake improved fin (13) for improving a wake distribution which is accelerated by a rotation of a fore propeller (2) and flows into an aft propeller (1), provided on the hull above the propeller shafts (3, 4) so as to extend toward a portion where the amount of change of flow rate of the wake is large (12) or a region where the fore propeller (2) and the aft propeller (1) overlap each other when they rotate.

3. The stern structure according to any preceding claim, **characterized in that** the bracket fin (8) is provided within a range of an outer diameter of the stern tubes (3a, 4a) and has a linear shape or a curved shape extending sternwards gradually upward or downward from the base end portion of the bracket fin (8).

4. The stem structure according to any preceding claim, **characterized in that** the bracket fin (8) is provided so as to extend linearly sternwards from the base end portion of the bracket fin (8), and has, in a vicinity of an aft end portion thereof and within a range of an outer diameter of the stem tubes (3a, 4a), a linear shape or a curved shape extending sternwards gradually upward or downward.

5. The stem structure according to claim 4, **characterized in that** a rotational direction of the fore propeller (2) located on a fore side of the propellers is set to a direction opposite the bilge vortex, that is, it is set to outward turning, and a rotational direction of the aft propeller (1) located on an aft side of the propellers is set to be identical with that of the fore propeller, that is, it is set to inward turning.

6. A stem structure of a ship comprising a single screw vessel type stem equipped with a propulsion device (hereinafter referred to as "overlapping propellers") formed such that: a pair of right and left propellers are disposed such that propeller shaft centers thereof are respectively located near centers of right and left bilge vortices; the rotational direction of at least one of the propellers is set to a direction opposite the bilge vortex, that is, it is set to outward turning; the propellers are provided close to each other such that the rotary surfaces thereof do not touch each other when viewed in plan view; and the propellers are formed such that the rakes thereof incline so as to be away from each other, **characterized in that**
the waterline shape of the stem in an area of at least 0.4R (R denotes a propeller radius) in a vertical direction from the propeller shaft center is sharpened such that: an inclination angle of an aft end portion of the waterline is 15 degrees or less with respect to the hull centerline; and a virtual width of a aft end position is 600 mm or less when the waterline shape is extended to the aft end.

7. A stem structure of a ship comprising a single-screw-vessel-type stem equipped with overlapping propellers (1, 2), **characterized in that**
a bracket fin (8) is provided in a space between the hull and each of stem tubes (3a, 4a) into which propeller shafts (3, 4) projecting from a starboard side and a port side of the hull located forward of an aft end are respectively inserted.

8. A stem structure of a ship comprising a single screw vessel type stem equipped with overlapping propellers, **characterized in that**
a wake improved fin for improving a wake distribution which is accelerated by a rotation of a fore propeller and flows into an aft propeller is provided on the hull above the propeller shaft so as to extend toward a portion where the amount of change of flow rate of the wake is large or a region where the fore propeller and the aft propeller overlap each other when they rotate.

9. A stem structure of a ship comprising a single screw vessel type stem equipped with overlapping propellers, **characterized in that**
a waterline shape of the stem in an area of at least 0.4R (R denotes a propeller radius) in a vertical direction from a propeller shaft center is sharpened such that: an inclination angle of an aft end portion of the waterline is 15 degrees or less with respect to the hull centerline; and a virtual width of an aft end position is 600 mm or smaller when the waterline shape is extended to the aft end, and
a bracket fin is provided in a space between the hull and each of stem tubes into which propeller shafts projecting from a starboard side and a port side of the stem located forward of an aft end are respectively inserted.

10. A stem structure of a ship comprising a single screw vessel type stem equipped with overlapping propellers, **characterized in that**
a waterline shape of the stem in an area of at least 0.4R (R denotes a propeller radius) in a vertical direction from a propeller shaft center is sharpened such that: an inclination angle of an aft end portion of the waterline is 15 degrees or less with respect to the hull centerline; and a virtual width of an aft end position is 600 mm or smaller when the waterline shape is extended to the aft end, and
a wake improved fin for improving a wake distribution which is accelerated by a rotation of a fore propeller and flows into an aft propeller is provided on the hull above a propeller shaft so as to extend toward a portion where the amount of change of flow rate of the wake is large or a region where the fore propeller and the aft propeller overlap each other when they rotate.

11. A stern structure of a ship comprising a single screw vessel type stem equipped with overlapping propellers, **characterized in that**
a bracket fin is provided in a space between the hull and each of stem tubes into which propeller shafts projecting from a starboard side and a port side of the stem located forward of an aft end are respectively inserted, and
a wake improved fin for improving a wake distribution which is accelerated by a rotation of a fore propeller and flows into an aft propeller is provided at the hull above the propeller shaft so as to extend toward a portion where the amount of change of flow rate of the wake is large or a region where the fore propeller and the aft propeller overlap each other when they rotate.

12. A stem structure of a ship comprising a single screw vessel type stem equipped with overlapping propellers, **characterized in that**
a waterline shape of the hull in an area of at least 0.4R (R denotes a propeller radius) in a vertical direction from a propeller shaft center is sharpened such that: an inclination angle of an aft end portion of the waterline is 15 degrees or less with respect to a hull centerline; and a virtual width of an aft end position is 600 mm or less when the waterline shape is extended to the aft end,
a bracket fin is provided in a space between the hull and each of stem tubes into which propeller shafts projecting from a starboard side and a port side of the stem portion located forward of an aft end are respectively inserted, and
a wake improved fin for improving a wake distribution which is accelerated by a rotation of a fore propeller and flows into an aft propeller is provided above the propeller shaft and at the hull so as to extend toward a portion where the amount of change of flow rate of the wake is large or a region where the fore propeller and the aft propeller overlap each other when they rotate.

13. The stem structure according to any of claims 6 to 12, **characterized in that** the bracket fin is provided within a range of an outer diameter of the stem tube and has a linear shape or a curved shape extending gradually upward or downward from the base end portion bracket fin toward a stem direction.

14. The stem structure according to any of claims 6 to 13, **characterized in that** the bracket fin is provided so as to extend linearly from the base end portion of the bracket fin toward a stem direction, and has, in a vicinity of an aft end portion thereof and within a range of an outer diameter of the stem tube, a linear shape or a curved shape extending gradually upward or downward toward a stem direction.

15. The stem structure according to claim 14, **characterized in that** a rotational direction of the fore propeller located on a fore side is set to a direction opposite the bilge vortex, that is, it is set to outward turning, and a rotational direction of the aft propeller located on an aft side is set to be identical with that of the fore propeller, that is, it is set to inward turning.
